# EUROPEAN PATENT APPLICATION

(11) **EP 2 316 760 A1**
(43) Date of publication of application: **04.05.2011**
(21) Application number: 10189222.2
(22) Date of filing: 28.10.2010
(51) Int. Cl.: B65G 47/26, B65G 47/68

(54) **Device and method for arranging sequences of products**

(30) Priority: 02.11.2009 NL 2003741
(71) Applicant: Visser 's-Gravendeel Holding B.V., 3295 KH 's-Gravendeel (NL)
(72) Inventor: Vanryckeghem, Marnix Erik, 8980, Passendale (BE)
(74) Representative: Grootscholten, Johannes A.M.

(57) **Abstract**

The present invention relates to a system and a method for arranging sequences of products (26) provided along substantially parallel paths (B). The system comprises a conveyor (7) on which the sequences of products (26) provided along parallel paths (B) are supplied; and a stop in (8), on or at the conveyor (7) which is adjustable between a position holding back the products (26) on the conveyor (7) and a position allowing the products (26) through over the conveyor (7). The method comprises of transporting the sequences of products (26) provided along parallel paths (B); and stopping the products (26) in adjustable and selective manner in, on or at the conveyor (7).

## Description

The present invention relates to a device and a method for arranging sequences of products provided along substantially parallel paths, such as food product packagings, for instance ready-to-eat meals, pizzas, soups, but possibly also products from the non-food sector.

Such products are usually supplied such that her filled packages or end products come from or out of a production facility over conveyors in parallel adjacent paths. Such a facility can for instance comprise a cooling unit at the end of the production run for the purpose of cooling food products placed in packages, for instance in the case of ready-to-eat meals which for instance can be reheated in a microwave oven by a consumer.

Particularly in the case where the products are provided over the substantially parallel paths in an arrangement which is to some extent unequal, irregular or even chaotic, for instance non-simultaneously along the substantially parallel paths over a conveyor, this usually results in difficulties in further processing, such as sealing, decorating or printing packages or receiving the packages in larger units, for instance in a box or on a crate etc., for transport purposes. The packages can emerge in irregular or even chaotic manner from a facility as a consequence of a winding route followed by the paths in a production facility, air turbulence in the production facility and/or other influences.

The present invention has for its object to provide an improved system with a correspondingly improved method relative to anything which is currently available in the art and has the above stated and/or other drawbacks, and to obviate or at least alleviate these drawbacks. For this purpose a system and a method are provided according to the invention with the features of the independent claim of the appended claims.

It is thus possible to hold back products in the mutually adjacent paths using an actuated stop and arrange them in a row lying transversely of the paths. The stop can then be released and the products can continue on their way in the associated path, albeit that a parallel sequence of such products can then be formed, this providing great advantages for the further processing. To the best knowledge of the inventors a system or method for realizing this is wholly new and without precedent.

The present invention has many preferred embodiments, only a few of which are stated in the dependent claims and of which it must be clearly noted that the scope of protection of the invention is defined in the independent claims, while the dependent claims relate only to possible embodiments within the context of this scope of protection, without this scope of protection having to be understood or interpreted as being limited to such preferred embodiments.

It is thus possible for the system to further comprise: a discharge oriented transversely of the conveyor and arranged downstream of the conveyor. Successively formed sequences can thus be re-formed in a single row, this being extremely favourable for the intended further processing. A holder can here be arranged in, on or at the discharge conveyor which acts on products moving past thereon for uniform alignment thereof. The products, particularly when these have shorter and longer sides, can thus be transported with certainty in the row with one of the shorter (or longer) sides at the front in the direction of forward movement.

In a possible embodiment a system according to the invention further comprises barrier means which are arranged upstream of the stop and which can be selectively activated and act selectively on the products. It is thus possible to select which products are allowed through to the stop and an accumulation at the position of the stop can be prevented with certainty. For this purpose the barrier means can preferably be synchronized with the operation of the stop and with the conveyor. Alternatively, detectors can be utilized with a view to obviating the same problem. When synchronization is effected, it can be such that products are only allowed through to the stop if the stop holds back products allowed to pass through the barrier means when the stop comes into operation at or on a leading edge of the products relative to the direction of forward movement thereof over the conveyor. It is thus possible to prevent the stop acting on a lower or upper surface of the products when it is actuated. Damage to the products and/or contamination of the content of a packaging which has not yet been closed or sealed can hereby be prevented.

In an embodiment of a system according to the invention with barrier means, a system according to the invention can be such that the barrier means comprise a feed conveyor which can be selectively set into operation. This is an embodiment of elegant and simple design, particularly in combination with a single type of control for other parts and components also in the form of a conveyor.

In a possible embodiment of the invention the conveyor can be in continuous operation during operation of the system. This is possible and advantageous particularly in a version with barrier means. The stop here holds back the products with or without barrier means while the conveyor continues to run. The products slide over the conveyor, held back there by the stop.

In an embodiment of the invention a system can be such that the stop acts from above on the products on the conveyor. This can be an addition or an alternative to an embodiment wherein the stop rises from under a carrying surface defined by the conveyor and can drop back thereunder again.

In an embodiment of the invention the system can have a stop rising from below and dropping back such that the conveyor, in combination with the number of substantially parallel paths, is divided into at least two sub-conveyors, and at least one stop is arranged between each pair of sub-conveyors for movement up and downward between a position below and above a carrying surface defined by the sub-conveyors. An operational range for the at least one stop is thus defined without major modifications to make this possible, and so elegantly and at low (additional) cost. The conveyor can here be divided into many smaller sub-conveyors such that the sub-conveyors together form at least one rope conveyor. The stop can then rise and drop back again between the ropes in order to selectively hold back the products.

In an embodiment of the invention a system can further comprise an inclining track disposed downstream in the direction of forward movement of the products. It can thus be ensured that products coming from the conveyor are fed through, for instance to the discharge conveyor.

A not inconsiderable number of aspects of a system according to the invention has thus already been considered generally in the foregoing on the basis of the independent claim and the dependent claims. Also following below is a detailed description of a specific embodiment of a system according to the invention, which is disclosed only by way of example and which must not be deemed as limitative for the scope of protection according to the appended claims, with reference to the drawings in which (parts of) systems according to the invention can be designated with the same reference numerals in the various views of the embodiments, and in which:
Fig. 1 shows a schematic perspective view of a system as embodiment of the invention;
Fig. 2-5 are side views of the embodiment shown in figure 1 in diverse operating modes thereof; and
Fig. 6 is a top view of an embodiment other than that of figures 1-5, but which is based on the same operating principle, for instance the method according to the invention.

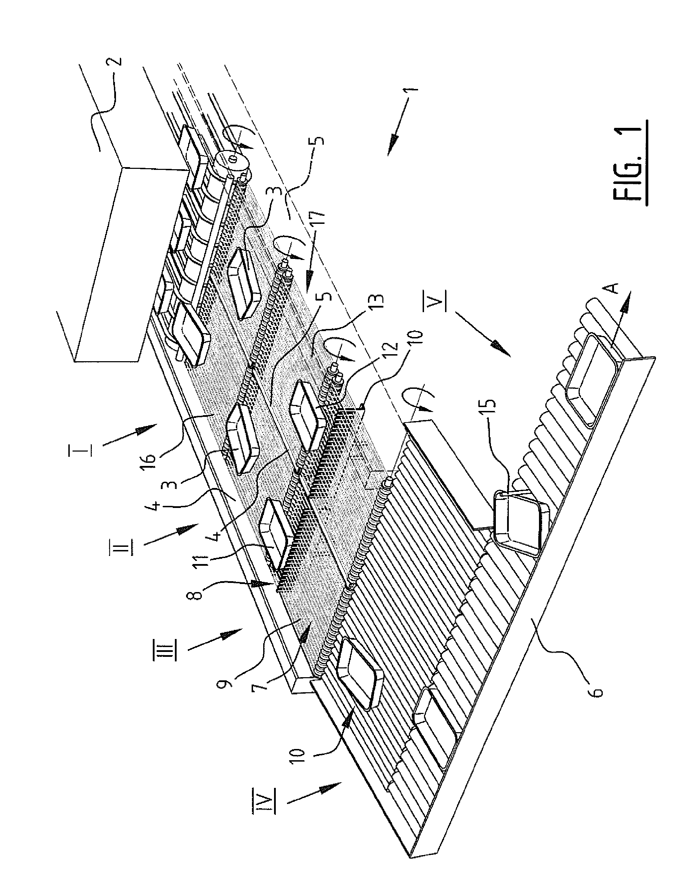

Figures 1-5 show a system 1 according to the present invention in various views and in diverse operating modes. System 1 connects onto a production facility 2 from which products 3 originate. The products are delivered by the production facility 2 in a number of paths, of which two paths 4, 5 are shown in fig. 1.

In the shown embodiment products 3 are packages which can be filled (not shown) with for instance food products, such as a ready-to-eat meal. Because of properties of production facility 2 which are not relevant here, the products 3 do not usually arrive in regular manner in system 1. This means that in a direction transversely of paths 4, 5 for instance the leading edges of products 3 do not lie in line relative to the direction of forward movement of products 3, but are offset. If no further measures were taken here, a product 3 delivered via a succession of paths 4 could pass through a system, arrive at a discharge conveyor 6 and be moved away from system 1 in sideways position. It can occur here that a package following one of the paths 5 on the right lands on top of or collides with the product 3 advancing sideways over discharge conveyor 6. This is undesirable.

In order to avoid such a situation or at least be able to reduce the risk thereof, a system 1 according to the present invention is at least formed by means of a conveyor 7 in combination with a stop 8.

Conveyor 7 takes the form of a rope conveyor 9 and stop 8 is formed by a comb 10, the teeth of which can move up and downward between the ropes of rope conveyor 9. For this purpose comb 10 is connected in a manner not shown to a drive for up and downward movement thereof. In an upward moved position of comb 10 the teeth thereof extend sufficiently high above the carrying surface for products 3 formed by the ropes of rope conveyor 9 to hold back products 3 when they come to lie against the stop 8 formed by comb 10.

When products 3 have come to lie against comb 10, rope conveyor 9 can be driven further. Because of the dimensioning of the teeth of comb 10 the products 3 cannot then be forced over stop 8.

In the situation shown in fig. 1 a package 11 has come to lie against stop 8. The rope conveyor is still being driven but package 11 cannot move further as a result of stop 8 being activated. At the same time another of the packages 12 is on the way toward stop 8. In operation for this purpose is an additional rope conveyor 13 which transfers the relevant one of packages 12 to rope conveyor 9 in (or on or at) which the stop 8 is arranged. The other of the packages 12 will thus also come to lie against stop 8, be it at a slightly later point in time than package 11, which in the view of fig. 1 has already come to a standstill against stop 8.

Stop 8 can thus be set into operation for a time in the sense that the teeth thereof protrude to a sufficiently high position above the carrier surface for products 3, 11, 12 defined by rope conveyor 9. After a predetermined period of time the comb 10 as embodiment of stop 8 is moved downward and further movement or transport of products 11, 12 is allowed. At such a moment the leading edges of products 11, 12 are aligned in accordance with the positioning of stop 8, and thus arrive at the laterally oriented discharge conveyor 6 in ordered manner without the danger that other products 3 can drop against or onto them.

An inclining track 14 is provided for the purpose of transferring products 3, 11, 12 from rope conveyor 9 to the laterally oriented discharge conveyor 6. This track lies at a small angle of for instance 3° to 7°. A holder 15 is arranged in the laterally oriented discharge conveyor 6. Products 3, 11, 12 which come up against holder 15 are forced by holder 15 into a desired alignment, and in the embodiment shown here according to fig. 1 this is an alignment with a shorter side in front in the direction of forward movement as indicated with arrow A.

In the embodiment shown in fig. 1 system 1 thus comprises a first zone I with a conveyor 16 which receives products 3 coming from production facility 2. Conveyor belt 16 can be in continuous operation. Conveyor belt 16 transfers products 3 to an intermediate conveyor 17 which, as conveyor 9, can for instance take the form of a rope conveyor. Intermediate conveyor 17 is preferably driven intermittently. A product 3 at the position of for instance product 12 is then only fed over conveyor 7 to stop 8 if, after intermediate conveyor 17 has been deactivated, said product 12 has been moved forward far enough onto conveyor 7 in order to realize this forward movement only on the basis of driving of conveyor 7. If this is not the case, a product 3, 12 will remain lying substantially on intermediate conveyor 17 and not be moved forward to stop 8. Intermediate conveyor 17 thus forms barrier means in the sense of determined embodiments of the present invention. Intermediate conveyor 17 substantially forms a second zone II which selectively allows products 3, 12 through to stop 8 at rope conveyor 9 in the third zone III, which can allow aligned products 11, 12 through via an inclining track 14 to the laterally oriented discharge conveyor 6 which in turn then per se forms zone V.

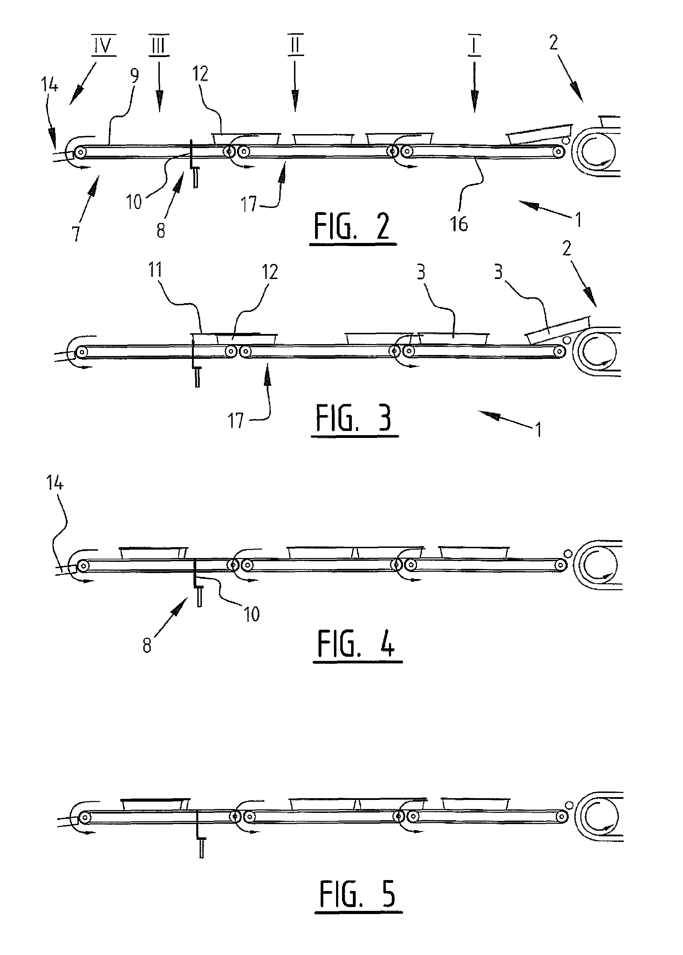

The diverse operating modes as described above are shown in figures 2-5. It is particularly noted that in the view of fig. 3 the operation of intermediate conveyor 17 is paused so that products 12 only cross onto conveyor 9 when products 12 are sufficiently far advanced to allow conveyor 9 to propel these products 12 against stop 8 in the form of comb 10. When product 12 reaches stop 8, or a short time thereafter, stop 8 is moved downward as shown in fig. 4, after which products 11, 12 can together move further in ordered alignment in the direction of inclining track 14. After passage of products 11, 12 the stop 8 is moved upward again, preferably directly behind a rear edge of products 11, 12 which has passed by in the direction of forward movement of the products, in order to hold back products following behind. The intermediate conveyor, which per se substantially forms the barrier means in a possible embodiment of the present invention, is also set into operation to feed products 3, 12 to stop 8.

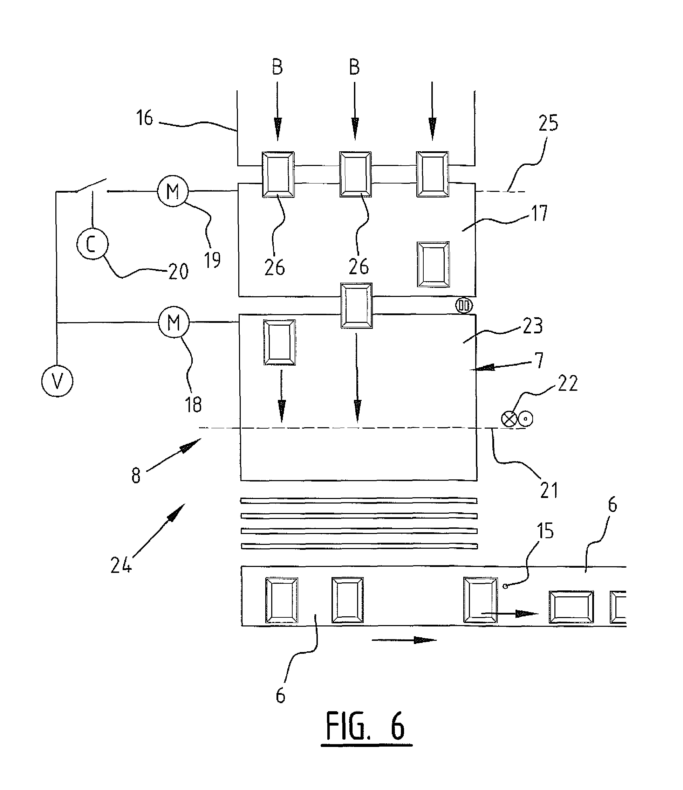

Fig. 6 shows a top view of an alternative embodiment according to the present invention. This is a schematic representation. Intermediate conveyor 17 and conveyor 7 are each connected to a drive, shown schematically as motors 18, 19 for respectively conveyor 7 and intermediate conveyor 17. A schematically shown control in the form of for instance a computer 20 provides for actuation of motor 19 of the intermediate conveyor 17 for intermittent activation by interrupting a supply voltage for motor 19 when this is deemed desirable by the control. This is associated with a synchronization between the schematically shown stop 8, which in the embodiment shown here can be an up and downward movable slide arranged above conveyor 7. The up and downward movement of such a slide 21 is show schematically with the arrows in and out of the plane of the view of fig. 6. A tiltable flap can also be applied instead of an up and downward movable slide. Because such a slide 21 or flap is arranged above the carrying surface formed by conveyor 7 for transporting products 3, no rope conveyor need be provided as embodiment of conveyor 7 but a conveyor belt 23 can be utilized as embodiment of conveyor 7. The operation of the system 24 shown in fig. 6 can otherwise be substantially the same as that shown with reference to fig. 1-5.

Receiving conveyor 16 is preferably connected or connectable to its own drive (not shown). The drive of receiving conveyor 16 is preferably somewhat faster than the supply speed of production facility 2 in fig. 1. This has the result that products 3, if they have an elongate form, are as it were pulled out of the production facility by receiving conveyor 16. The intention hereof is that the long or elongate products 3 here come to lie more in line with the direction of forward movement thereof over system 1, 24. It would be preferable for products 3 to leave the production facility in the direction of forward movement of arrows B with the leading edges 26 in one line as indicated with broken line 25. This is not possible however in many production facilities and the system, in various embodiments thereof as described above with reference to the accompanying figures, provides a solution for singulating products 3, as it is known, in an elegant and simple manner without collisions and accumulations or for enabling arrangement thereof in a continuous row or sequence as formed at bottom right in fig. 6.

The present invention is thus by no means limited to the specific features and measures as shown and described above in all of the diverse embodiments of systems according to the present invention. Rope conveyors and belt conveyors are mutually interchangeable and there are for instance also possibilities for applying detection means for enabling selective holding back of products 3, 11, 12 against stop 8 or on intermediate conveyor 17 for as long as necessary so that as many products 3, 11, 12 as possible can be allowed through simultaneously and adjacently of each other to the lateral discharge conveyor 6. In fig. 1 the lateral discharge conveyor 6 takes the form of a roller conveyor, but in the embodiment of fig. 6 the lateral discharge conveyor is in contrast a belt conveyor. Receiving conveyor 16 and intermediate conveyor 17 could be formed together to enable realization of a system according to the invention and within the scope of protection according to the appended claims, although it is then also recommended that the function of receiving conveyor 16 of straightening the products 3 can continue to be realized in some manner, together with a separate function of intermediate conveyor 17 which forms barrier means in the sense of the present invention. The inclining track 14 could be omitted if stop 8 is sufficiently effective, and conveyor 7 could then be placed at a slight angle and conveyor 7 can here then adjoin the lateral discharge conveyor 6.

## Claims

1. System for arranging sequences of products provided along substantially parallel paths, comprising:
- a conveyor on which the sequences of products provided along parallel paths are supplied;
- a stop in, on or at the conveyor which is adjustable between a position holding back the products on the conveyor and a position allowing the products through over the conveyor.

2. System as claimed in claim 1, further comprising a discharge conveyor oriented transversely of the conveyor and arranged downstream of the conveyor.

3. System as claimed in claim 2, wherein a holder is arranged at the discharge conveyor which acts on products moving past thereon for uniform alignment thereof.

4. System as claimed in claim 1, 2 or 3, further comprising barrier means which are arranged upstream of the stop and which can be selectively activated and act selectively on the products.

5. System as claimed in claim 4, wherein the barrier means are synchronized with the operation of the stop and with the conveyor.

6. System as claimed in claim 5, wherein the synchronization is such that products are only allowed through to the stop if the stop holds back products allowed to pass through the barrier means when the stop comes into operation at or on a leading edge of the products relative to the direction of forward movement thereof over the conveyor.

7. System as claimed in claim 4, 5 or 6, wherein the barrier means comprise a feed conveyor which can be selectively set into operation.

8. System as claimed in at least one of the foregoing claims, wherein the conveyor is in continuous operation during operation of the system.

9. System as claimed in at least one of the foregoing claims, wherein the stop acts from above on the products on the conveyor.

10. System as claimed in at least one of the foregoing claims, wherein the conveyor, in combination with the number of substantially parallel paths, is divided into at least two sub-conveyors, and at least one stop is arranged between each pair of sub-conveyors for movement up and downward between a position below and above a carrying surface defined by the sub-conveyors.

11. System as claimed in claim 10, wherein the sub-conveyors together form at least one rope conveyor.

12. System as claimed in at least one of the foregoing claims, further comprising an inclining track disposed downstream in the direction of forward movement of the products.

13. Method for arranging sequences of products provided along substantially parallel paths, comprising of:
- transporting the sequences of products provided along parallel paths;
- stopping the products in adjustable and selective manner in, on or at the conveyor.
